# EUROPEAN PATENT APPLICATION

(11) **EP 1 689 151 A1**
(43) Date of publication of application: **09.08.2006**
(21) Application number: 05002273.0
(22) Date of filing: 03.02.2005
(51) Int. Cl.: H04M 1/725

(54) **Mobile communication device capable of changing its user interface**

(71) Applicant: Chi Mei Communication Systems, Inc., Tai-Nan County Taiwan R.O.C. (TW)
(72) Inventor: Chuang, Meng-Hsi, Taipei City Taiwan (TW)
(74) Representative: Weber, Joachim

(57) **Abstract**

A mobile communication device (20) includes a housing (24), a circuit board (26) installed inside the housing (24), a control module (34) installed on the circuit board (26) for controlling the mobile communication device (20), a first memory module (28) installed on the housing (24) and coupled to the control module (34) on the circuit board (26), the first memory module (28) storing a data group (44), a second memory module (36) installed on the circuit board (26) and coupled to the control module (34), the second memory module (36) storing an application (38), and a multimedia output interface (50) installed on the circuit board (26) and coupled to the control module (34) for receiving signals resulting from the control module (34) executing the application (38) stored in the second memory module (36) for reading the data group (44) stored in the first memory module (28) and for outputting an operating interface corresponding to the data group (44).

## Description

The present invention relates to a mobile communication device according to the pre-characterizing clause of claim 1.

Nowadays mobile phones have become very popular because of the decreasing price and the improvement of technology. So more and more mobile phones enter the market. Manufacturers also add more additional features and functions in their mobile phones to satisfy all kinds of consumers, like sending text and images to other mobile phones, browsing the internet, receiving and sending email, listening to the radio, and even providing image capturing function by an internal or external phone camera and sending photos by MMS. But the conventional mobile phone lacks a fun and friendly user interface, and the expansibility and the individuality of the conventional mobile phone have to be improved.

This in mind, the present invention aims at providing a mobile communication device capable of changing its user interface for improving the expansibility and the individuality of the mobile communication device.

This is achieved by a mobile communication device according to claim 1. The dependent claims pertain to corresponding further developments and improvements.

As will be seen more clearly from the detailed description following below, the claimed mobile communication device combines the housing and the memory module and stores image data or sound data of the user interface (not main program) in the memory module on the housing. Hence users only not change the appearance of the mobile communication device of the present invention but also change the user interface corresponding to the appearance by changing the housing.

In the following, the invention is further illustrated by way of example, taking reference to the accompanying drawings. Thereof:
Fig.1 is a schematic drawing of a conventional mobile phone in a prior art.
Fig.2 is an assembly drawing of a mobile communication device of the present invention.
Fig.3 is a functional block diagram of the mobile communication device shown in Fig.2 of the present invention.

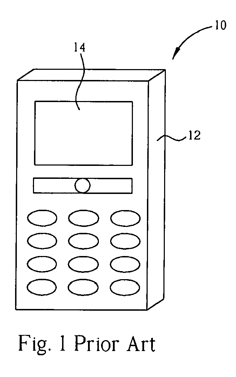

Please refer to Fig.1. Fig.1 is a schematic drawing of a conventional mobile phone 10. The mobile phone 12 includes a housing 12 for covering components inside the mobile phone 10, and a display module 14, which can be a liquid crystal display, for displaying the user interface and function menus. Regarding the man-machine interface of the mobile phone 10, the user interface and corresponding functions are fixed after the mobile phone 10 leaves the factory. In other words, the operating interface users view on the display module 14 is fixed, and users cannot modify and expand the user interface and the functions of mobile phones that left the factory. At most, the themes and desktops can be changed, and/or the housing 12 of the mobile phone 10 can be changed. But simply changing the housing 12 of the mobile phone 10 cannot harmonize the appearance and the user interface perfectly. Hence the conventional mobile phone lacks a fun and friendly user interface, and the expansibility and the individuality of the conventional mobile phone have to be improved.

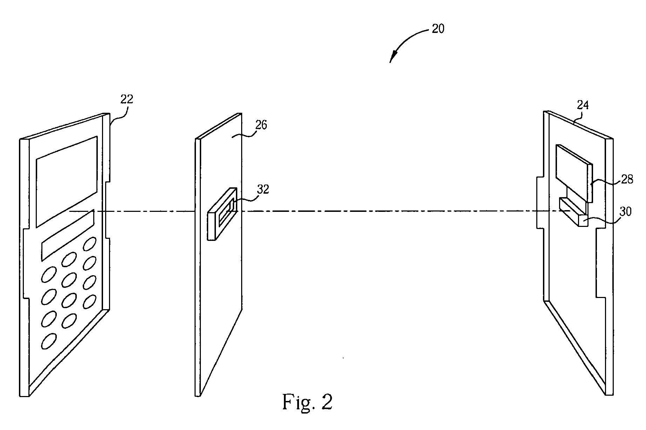

Please refer to Fig.2. Fig.2 is an assembly drawing of a mobile communication device 20 of the present invention. The mobile communication device 20 can be a mobile phone. The mobile communication device 20 includes a first housing 22 and a second housing 24. The first housing 22 and the second housing 24 can be combined for covering components inside the mobile communication device 20. The mobile communication device 20 further includes a circuit board 26 installed inside the first housing 22 and the second housing 24, a first memory module 28 installed on the second housing 24, a first connector 30 installed on the second housing 24 and coupled to the first memory module 28, and a second connector 32 installed on the circuit board 26 for connecting with the first connector 30.

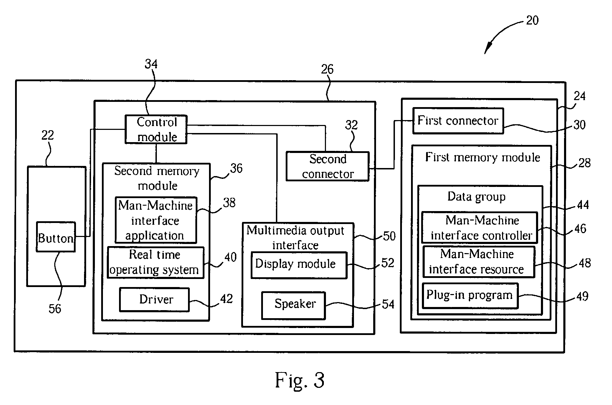

Please refer to Fig. 3. Fig. 3 is a functional block diagram of the mobile communication device 20 of the present invention. The mobile communication device 20 further includes a control module 34 installed on the circuit board 26 for controlling operation of the mobile communication device 20. The control module 34 is coupled to the second connector 32. The mobile communication device 20 further includes a second memory module 36 installed on the circuit board 26 and coupled to the control module 34. The second memory module 36 stores a Man-Machine Interface Application 38 which is an interface application for providing interactive functions between the mobile communication device 20 and users. In addition, the second memory module 36 further stores a real time operating system (RTOS) which is the main operating system of the mobile communication device 20, and drivers 42 of hardware components of the mobile communication device 20 for communicating with the hardware components. The first memory module 28 stores a data group 44 which can be a Dynamic Linking Library (DDL) or can be in another data format. The data group 44 includes Man-Machine Interface Controller 46, Man-Machine Interface Resource 48, and a plug-in program 49. The mobile communication device 20 further includes a multimedia output interface 50 installed on the circuit board 26 and coupled to the control module 34 for receiving signals resulting from the control module 34 executing the Man-Machine Interface Application 38 stored in the second memory module 36 for reading the data group 44 stored in the first memory module 28 so as to output an operating interface corresponding to the data group 44. The multimedia output interface 50 includes a display module 52 which can be a liquid crystal display for receiving image signals resulting from the control module 34 executing the Man-Machine Interface Application 38 stored in the second memory module 36 for reading the data group 44 stored in the first memory module 28 so as to display image data corresponding to the data group 44. And the user interface and the function menu can be displayed on the display module 52. For this reason the data group 44 includes image data or font data. The multimedia output interface 50 further includes a speaker 54 for receiving audio signals resulting from the control module 34 executing the Man-Machine Interface Application 38 stored in the second memory module 36 for reading the data group 44 stored in the first memory module 28 so as to transform the audio signals corresponding to the data group 44 into voice waves. For this reason the data group 44 includes ring tone data or other sound effect data. The mobile communication device 20 further includes a plurality of buttons 56 installed on the first housing 22 for inputting control signals.

When the mobile communication device 20 is fabricated completely, that is, when the circuit board 26 is positioned inside the first housing 22 and the second housing 24 and the first housing 22 and the second housing 24 are combined, the second connector 32 on the circuit board 26 and the first connector 30 on the second housing 24 will be connected. The connection type of the second connector 32 and the first connector 30 can be in male and female connection, pin connection, edge connection, and so on. When the second connector 32 on the circuit board 26 and the first connector 30 on the second housing 24 are connected, the control module 34 on the circuit board 26 can be coupled to the first memory module 28 on the second housing 24 and the control module 34 is capable of reading data stored in the first memory module 28. When a user utilizes application programs of the mobile communication device 20 with the buttons 56, the control module 34 will execute the Man-Machine Interface Application 38 stored in the second memory module 36 and the Man-Machine Interface Application 38 will call the data group 44 stored in the first memory module 28, that is, the Man-Machine Interface Application 38 calls data in Dynamic Linking Libraries. The Man-Machine Interface Controller 46 of the data group 44 stored in the first memory module 28 can include buttons, menus, scroll bars, ring tone functions, and so on. For example, the button options are stored in button.dll of the Man-Machine Interface Controller 46. The images and fonts presenting in the Man-Machine Interface Application 38 belong to the Man-Machine Interface Resource 48. For example, background images of an application are stored in image.dll of the Man-Machine Interface Resource 48. In addition, the plug-in program 49 of the group data 44 can include some games corresponding to a theme for being called by the Man-Machine Interface Application 38. The control module 34 executes the Man-Machine Interface Application 38 stored in the second memory module 36, and then the Man-Machine Interface Application 38 calls the functions stored in the data group 44 stored in the first memory module 28. After that the control module 34 outputs the corresponding signals to the multimedia output interface 50 according to the operation result generated by the Man-Machine Interface Application 38. The display module 52 of the multimedia output interface 50 receives image signals and displays image data corresponding to the data group 44 so that users can see the user interface and the function menu of the first memory module 28 on the display module 52. The speaker 54 of the multimedia output interface 50 receives audio signals and transforms the audio signals into voice waves corresponding to the data group 44 so that users can listen to the ring tone or sound effect of the first memory module 28 via the speaker 54.

In conclusion, the mobile communication device 20 of the present invention stores image data or sound data of the user interface (not main program) in the first memory module 28 on the second housing 24, so users can make a replacement for appearance and the software of the user interface at the same time by changing the second housing 24 so that the appearance and the user interface can complement one another. For example, users can change the first housing 22 and the second housing 24 into a housing relating to an automobile theme, and at the same time change the Man-Machine Interface Controller 46, the Man-Machine Interface Resource 48, and the plug-in program 49 stored in the first memory module 28 on the second housing 24 to relate to the automobile theme too. For example, the function menu can be displayed as a dashboard of an automobile, the control button can be displayed as a wheel pattern, the signal intensity or the battery volume of the mobile communication device 20 can be displayed as a gasoline gauge, and the ring tone or sound effect can be presented as engine noise. Hence users only not change the appearance of the mobile communication device 20 but also change the user interface corresponding to the appearance by changing the housing.

Compared to the conventional mobile communication device, the mobile communication device of the present invention combines the housing and the memory module and stores image data or sound data of the user interface (not main program) in the memory module on the housing. Hence users only not change the appearance of the mobile communication device of the present invention but also change the user interface corresponding to the appearance by changing the housing. The mobile communication device of the present invention improves the expansibility and the individuality of the mobile communication device.

## Claims

1. A mobile communication device (20) comprising:
a housing (24);
a circuit board (26) installed inside the housing (24);
a control module (34) installed on the circuit board (24) for controlling the operation of the mobile communication device (20);
a second memory module (36) installed on the circuit board (26) and coupled to the control module (34), the second memory module (36) storing an application (38);
**characterized in that** the mobile communication device (20) further comprises:
a first memory module (28) installed on the housing (24) and coupled to the control module (34) on the circuit board (26), the first memory module (28) storing a data group (44); and
a multimedia output interface (50) installed on the circuit board (26) and coupled to the control module (34) for receiving signals resulting from the control module (34) executing the application (38) stored in the second memory module (36) for reading the data group (44) stored in the first memory module (28) and for outputting an operating interface corresponding to the data group (44).

2. The mobile communication device of claim 1, **characterized in that** the multimedia output interface (50) is a display module (52) for receiving image signals resulting from the control module (34) executing the application (38) stored in the second memory module (36) for reading the data group (44) stored in the first memory module (28) so as to display image data corresponding to the data group (44).

3. The mobile communication device of claim 2, **characterized in that** the data group (44) comprises image data.

4. The mobile communication device of claim 2, **characterized in that** the data group (44) comprises font data.

5. The mobile communication device of claim 1, **characterized in that** the multimedia output interface (50) is a speaker (54) for receiving audio signals resulting from the control module (34) executing the application (38) stored in the second memory module (36) for reading the data group (44) stored in the first memory module (28) so as to transform the audio signals corresponding to the data group (44) into voice waves.

6. The mobile communication device of claim 5, **characterized in that** the data group (44) comprises a ring tone datum.

7. The mobile communication device of claim 1, **characterized in that** the data group (44) comprises Man-Machine Interface Controller data (46).

8. The mobile communication device of claim 1, **characterized in that** the data group (44) comprises Man-Machine Interface Resource data (48).

9. The mobile communication device of claim 1, **characterized in that** the application (38) is a Man-Machine Interface Application (38).

10. The mobile communication device of claim 1, **characterized in that** the second memory module (36) further stores a real time operating system (40) (RTOS).

11. The mobile communication device of claim 1, **characterized in that** the second memory module (36) further stores drivers (42) of hardware components of the mobile communication device (20).

12. The mobile communication device of claim 1, **characterized in that** the mobile communication device (20) further comprises a first connector (30) installed on the housing (24) and coupled to the first memory module (28), and a second connector (32) installed on the circuit board (26) and coupled to the control module (34) for connecting with the first connector (30) so that the control module (34) is capable of reading the data group (44) stored in the first memory module (28).

13. The mobile communication device of claim 1, **characterized in that** the mobile communication device (20) further comprises a plurality of buttons (56) installed on the housing (24) for inputting control signals.

14. The mobile communication device of claim 1, **characterized in that** the mobile communication device (20) is a mobile phone.
